**Europäisches Patentamt**

**European Patent Office**

**Office européen des brevets**

(19)

(11) Veröffentlichungsnummer: **0 299 141 B1**

# (12) EUROPÄISCHE PATENTSCHRIFT

(45) Veröffentlichungstag der Patentschrift:
26.06.91 Patentblatt 91/26

(51) Int. Cl.$^5$: **B23Q 3/155,** B23B 29/04,
B23B 3/04

(21) Anmeldenummer: **88104796.3**

(22) Anmeldetag: **25.03.88**

(54) **Werkzeugmaschine, Stanzmaschine oder dergleichen Maschine mit Werkzeughalteeinrichtung für automatischen Werkzeugwechsel.**

(30) Priorität: **15.04.87 DE 3712820**

(43) Veröffentlichungstag der Anmeldung:
**18.01.89 Patentblatt 89/03**

(45) Bekanntmachung des Hinweises auf die
Patenterteilung:
**26.06.91 Patentblatt 91/26**

(84) Benannte Vertragsstaaten:
**AT BE CH DE ES FR GB GR IT LI LU NL SE**

(56) Entgegenhaltungen:
**EP-A- 0 101 917
WO-A-81/02266
DD-A- 226 810
DE-A- 3 230 051**

(73) Patentinhaber: **AXA-ENTWICKLUNGS- UND
MASCHINENBAUGESELLSCHAFT FÜR
PRODUKTIONSTECHNISCHE ANLAGEN UND
GERÄTE MBH
Münsterstrasse 57
W-4437 Schöppingen (DE)**

(72) Erfinder: **Kappelhof, Heinrich, Dipl.-Ing.
Münsterstrasse 57
W-4437 Schöppingen (DE)**
Erfinder: **Wolf, Gottfried, Dipl.-Ing.
Lerchenstrasse 19
W-4437 Schöppingen (DE)**

(74) Vertreter: **Schulze Horn, Stefan, Dipl.-Ing.
M.Sc.
Goldstrasse 36
W-4400 Münster (DE)**

**Beschreibung**

Die Erfindung betrifft eine Werkzeugmaschine, Stanzmaschine oder dergleichen Maschine, mit einer Werkzeughalteeinrichtung für den automatischen Werkzeugwechsel, wobei die Maschine eine Spindel aufweist, die in ihrem freien Ende eine als Spannzange ausgebildete Spanneinrichtung für ein Werkzeug besitzt, welches durch eine Werkzeugwechseleinrichtung zu- und abführbar ist, wobei in der Spindel eine die Spannzange durch axiale Verschiebung betätigende Zugstange geführt ist und wobei das Werkzeug jeweils spindelseitig einen Werkzeughaltekopf mit einem umgekehrt kegelstumpfförmigen Zentrierkonus aufweist, der zur Verspannung des Werkzeuges gegen die Spindel von der Spannzange in deren Spannstellung mit einer konischen Innenfläche hintergreifbar ist.

Werkzeugmaschinen mit Halteeinrichtungen der genannten Art sind z.B. aus der EP-A-01 01 917, der DE-A-32 30 051 und der EP-A-01 62 824 bekannt und dienen dazu, sich wiederholende mechanische Bearbeitungsvorgänge schnell und mit hoher Genauigkeit automatisch auszuführen. Bei diesen Maschinen ist es üblich, die Werkzeuge bzw. Werkzeughalter mittels eines kegeligen oder konischen Schaftes, der axial in eine passende Aufnahme in der Spindel gezogen oder gedrückt wird, einzuspannen. Hierbei führt die Werkzeugwechseleinrichtung sowohl eine im wesentlichen senkrecht zur Spindelachse verlaufende Bewegung zur Heranführung von der Seite her bzw. Abführung des Werkzeuges zur Seite hin als auch eine relativ langhubige Axialbewegung zur Einführung des Kegelschaftes in die Spindel bzw. zur Herausführung des Schaftes aus der Spindel relativ zu dieser durch.

Nachteilig ist bei den bekannten Werkzeugmaschinen und Werkzeughalteeinrichtungen, daß zum einen der von dem Werkzeug in zwei Raumdimensionen zurückzulegende, relativ lange Weg die Mechanik der Werkzeugwechseleinrichtung sehr verkompliziert und daß zum anderen die Zurücklegung dieses Weges beim Werkzeugwechsel erhebliche Zeit beansprucht, zumal der axiale Weg zweimal zurückgelegt wird, nämlich einmal beim Entnehmen des Werkzeuges und einmal beim Einführen des nächsten Werkzeuges. Ein weiterer Nachteil bei bekannten Maschinen ist, daß schon relativ kleine Maßabweichungen im Durchmesser des Kegelschaftes des Werkzeuges und in der kegeligen Bohrung in der Spindel aufgrund der kegeligen Übersetzung zu relativ großen axialen Längen- bzw. Höhenabweichungen des Werkzeuges führen.

Es stellt sich daher die Aufgabe, eine Werkzeugmaschine, Stanzmaschine oder dergleichen Maschine mit einer, Werkzeughalteeinrichtung der eingangs genannten Art zu schaffen, mit der ein schnellerer Werkzeugwechsel möglich ist und bei der eine hohe Genauigkeit der axialen Lage des Werkzeuges gewährleistet ist.

Die Lösung dieser Aufgabe gelingt erfindungsgemäß durch eine Werkzeughalteeinrichtung der eingangs genannten Art, welche dadurch gekennzeichnet ist, daß die Spannzange mit einer wenigstens einseitig offenen T-förmigen Ausnutung versehen ist, daß das Spindelende wenigstens einseitig eine T-förmige oder rechteckförmige Ausnutung aufweist und daß die Ausnutungen von Spannzange und Spindelende ein Ein- und Ausfahren des Werkzeughaltekopfes von der Seite her bzw. zur Seite hin ermöglichend in Flucht miteinander positionierbar sind.

Vorteilhaft erfolgt hier das Verspannen von Werkzeugaufnahmekopf und Spindel gegeneinander auf einem sehr viel kürzeren Weg und damit einfacher und schneller als bisher üblich, da werkzeugseitig die axiale Bewegung beim Werkzeugwechsel fast völlig entfällt. Bei dieser Werkzeughalteeinrichtung kann das Werkzeug bei entsprechend vorgeschobener Position der Spannzange von der Seite her mit dem Zentrierkonus in das Innere der Spannzange verfahren werden. Durch Anziehen der Spannzange über die Zugstange wird der Werkzeugaufnahmekopf in axialer Richtung zur Stirnseite der Spindel gezogen und gegen diese verspannt. Der von der Spannzange axial zurückzulegende Weg ist hier sehr kurz und hat lediglich etwa eine Länge, die der Höhe des Zentrierkonus entspricht und die damit nur noch einen Bruchteil der bisher üblichen Weglänge beträgt. Die Werkzeugwechseleinrichtung selbst braucht keinen axialen Hub mehr auszuführen und kann damit sehr viel einfacher gestaltet sein. Aufgrund der konischen Form des Zentrierkegels des Spannbolzens und der Gegenfläche der Spannzange erfolgt eine exakte Zentrierung des Werkzeugaufnahmekopfes und damit des Werkzeuges zur Spindellängsachse. Die Zentrierkraft entspricht hierbei der von der Zugstange ausgeübten Spannkraft, so daß die Zentrierung auch bei seitlicher Belastung des Werkzeuges sicher erhalten bleibt. Ein weiterer Vorteil ist, daß die Spannzange keine beweglichen Teile aufweist, was die Betriebssicherheit erhöht und den Verschleiß mindert. Dies wird dadurch ermöglicht, daß der Zentrierkonus von der Seite her in die Spannzange gelangt und nicht, wie bisher üblich, von unten her in eine zunächst geöffnete und sich dann schließende Spannzange mit radial beweglichen Greifbacken eingeführt wird. Der Werkzeughaltekopf selbst legt lediglich noch einen minimalen Hubweg zurück, der in der Praxis beispielsweise 1-2 mm beträgt, während der Hub der Spannzange etwas größer ist und etwa der Höhe des Zentrierkonus entspricht, was in der Praxis z.B. 6-8 mm sind. Die axial zurückzulegenden Wege sind somit extrem kurz, was für die deutlich verkürzte Werkzeugwechselzeit sorgt. Praktische Versuche haben gezeigt, daß die Wechselzeit auf etwa 1/5 der ursprünglichen Wechselzeit verkürzt werden kann, was die unproduktiven Totzeiten der Maschine deutlich vermindert.

Grundsätzlich ist die Anordnung von Spannzange und Zentrierkonus an Spindel und Werkzeughaltekopf beliebig, d.h. umkehrbar. Da jedoch die Herstellung einer Spannzange aufwendiger ist als die eines Zentrierkonus, ist bevorzugt der Zentrierkonus an der Stirnseite des Werkzeughaltekopfes und die Spannzange am Ende der Zugstange angeordnet.

Um unterschiedliche Ausführungen von Werkzeugwechseleinrichtungen bei der Werkzeugmaschine, Stanzmaschine oder dergleichen Maschine mit den einer Werkzeughalteeinrichtung gemäß Erfindung problemlos anwenden zu können, ist vorgesehen, daß die Ausnutzungen in der Spannzange und der Spindel zur Gestattung eines Durchfahrens des Werkzeughaltekopfes durch diese miteinander fluchtend je nach Ausführung der Werkzeugwechseleinrichtung in einer geraden Linie oder in einer bogenförmigen Linie vollständig durch Spannzange und Spindel verlaufen. Die Werkzeugwechseleinrichtung kann damit sowohl einen geradlinigen Werkzeugverschub als auch einen bogenförmigen Werkzeugverschub aufweisen, was vorteilhaft eine einfache Nachrüstung oder Umrüstung bereits vorhandener Werkzeugmaschinen unabhängig von der Art der Werkzeugwechseleinrichtung und ohne deren Austausch erlaubt. Weiterhin trägt die Durchfahrmöglichkeit zu einem schnellen Werkzeugwechsel bei, wenn ein Werkzeug willkürlich aus einer Anzahl von mehreren Werkzeugen auszuwählen ist.

Eine vorteilhafte Ausgestaltung der Erfindung ist dadurch gekennzeichnet, daß der Zentrierkonus als Kopfende eines zentrisch aus einer im wesentlichen flachen Stirnseite des Werkzeughaltekopfes vorragenden Spannbolzens ausgebildet ist und daß der Werkzeughaltekopf mit seiner Stirnseite flächig gegen eine dieser zugewandte Stirnfläche der Spindel unter Zentrierung durch die zusammenwirkenden konischen Flächen von Zentrierkonus und Spannzange verspannbar ist. Diese Gestaltung bietet eine einfache und kostengünstige Herstellbarkeit der einzelnen Teile. Da die aneinanderliegenden Stirnflächen von Spindel und Werkzeughaltekopf relativ große Durchmesser aufweisen können, sind im Zusammenwirken mit der hohen Spannkraft der Spannzange und der Zugstange Verkippungen von Haltekopf und Spindel gegeneinander auch bei hohen Seitenkräften praktisch ausgeschlossen.

Um sicherzustellen, daß auch bei der Übertragung hoher Drehmomente ein sicherer Kraftfluß von der Spindel zum Werkzeughaltekopf gewährleistet bleibt, ist vorgesehen, daß zwischen dem Werkzeugaufnahmekopf und der Spindel zur Gewährleistung der Kraftübertragung ein mehrarmiger, wenigstens vierarmiger, flacher Mitnehmerstern mit Spiel senkrecht zur Spindellängsachse angeordnet ist, wobei wenigstens zwei Arme einander gegenüberliegend an der Spindel und zwei andere Arme einander gegenüberliegend an dem Werkzeughaltekopf zur Drehmomentübertragung abgestützt sind. Durch diese Gestaltung und Anordnung des Mitnehmersterns wird erreicht, daß dieser einzig und allein ein Drehmoment übertragen kann. Eine mechanische Überbestimmung wird hiermit vermieden, so daß die Übertragung von anderen Kräften, die die Zentrierung des Werkzeughaltekopfes beeinträchtigen könnten, ausgeschlossen ist.

Zur Vereinfachung der mechanischen Konstruktion der Werkzeughalteeinrichtung ist vorgesehen, daß die an der Spindel abgestützten Arme des Mitnehmersterns endseitig aufragende, in die in der Spindel vorhandene Ausnutzung eingreifende Vorsprünge aufweisen und daß der Mitnehmerstern mit seinen Armen in einer ein Seitenspiel senkrecht zur Spindellängsachse erlaubenden, passend geformten Ausnehmung in der Stirnseite des Werkzeughaltekopfes versenkt angeordnet ist. Für die Drehmomentabgabe von der Spindel wird die vorhandene Ausnutzung verwendet, die damit vorteilhaft eine doppelte Funktion erhält. Die Ausnehmung in der Stirnfläche des Werkzeughaltekopfes ist ebenso wie der Mitnehmerstern selbst in dieser Ausgestaltung der Erfindung relativ einfach und damit kostengünstig herstellbar.

Um sicherzustellen, daß der Mitnehmerstern im Betrieb nicht verloren gehen kann, ist zweckmäßig vorgesehen, daß der Mitnehmerstern eine zentrale Öffnung aufweist, daß der Spannbolzen durch diese Öffnung hindurchgeführt und mit dem Werkzeughaltekopf verschraubt ist und daß der Spannbolzen einen in eingeschraubtem Zustand oberhalb des Mitnehmersterns im Abstand von diesem verlaufenden, vorkragenden Rückhalterand aufweist. Für den Fall, daß der Mitnehmerstern ausgewechselt werden soll, kann der Spannbolzen von dem übrigen Teil des Werkzeughaltekopfes abgeschraubt werden.

Wegen der erforderlichen axialen Verschiebbarkeit der Spannzange kann es vorkommen, daß nach längerer Betriebsdauer ein seitliches Spiel zwischen Spannzange und Spindel auftritt. Bei den heute geforderten Genauigkeiten der Werkzeugpositionierbarkeit 1/100 mm sollte hier jedes Spiel möglichst vermieden werden. Dies gelingt bei der Erfindung dadurch, daß die Spannzange zusätzlich zu ihrer Ausnutzung in ihrem unteren Teil eine Schlitzung aufweist. Die Schlitzung sorgt zusammen mit der Ausnutzung dafür, daß sich die Spannzange in gespanntem Zustand in ihrem unteren Teil unter der Wirkung der aneinandergepreßten Flächen von Zentrierkonus des Spannbolzens und konischer Gegenfläche der Spannzange leicht aufweitet, bis sie stramm im Inneren der Spindel sitzt, wodurch die Zentrierung nicht beeinflußt wird, ein eventuell vorhandenes Spiel oder eintretender Verschleiß jedoch ausgeglichen werden.

Schließlich ist noch vorgesehen, daß der Werkzeughaltekopf als Adapter mit einer kegelförmigen Ausnehmung in seiner Unterseite zur Aufnahme eines herkömmlichen, mit einem Kegelschaft ausgestatteten Werkzeuges bzw. Werkzeughalters ausgebildet ist. Diese Gestaltung eröffnet die Möglichkeit, daß von den Benutzern der neuen Werkzeughalteeinrichtung auch bereits vorhandene, relativ teure Werkzeuge bzw. Werkzeughalter weiterverwendet werden können. Hierdurch wird eine Umstellung auf die neue Halteeinrichtung für den Benutzer erleichtert, da Zusatzkosten für völlig neue Werkzeuge nicht anfallen, sondern lediglich die Adapter zusätzlich zu beschaffen sind.

Bevorzugte Ausführungsbeispiele der Erfindung werden im folgenden anhand einer Zeichnung näher erläutert. Die Figuren der Zeichnung zeigen im einzelnen :

Figur 1 einen Werkzeughaltekopf mit Mitnehmerstern und Spannbolzen sowie einen Werkzeughalter und eine Spannzange als Teile der Werkzeughalteeinrichtung in auseinandergezogener, perspektivischer Darstellung,

Figur 2 eine Spindel einer Werkzeugmaschine mit darin geführter Spannzange, teils im Längsschnitt, teils in Ansicht,

Figur 3a das untere Ende der Spindel mit der Spannzange im Querschnitt in einer ersten Ausführung,

Figur 3b das untere Ende der Spindel mit der Spannzange, ebenfalls im Querschnitt in einer zweiten Ausführung,

Figur 3c die Spannzange aus Figur 2 im Längsschnitt, in einer um etwa 90° um ihre Längsachse gedrehten Position,

Figur 4 den Werkzeughaltekopf aus Figur 1 in zusammengebautem Zustand mit eingesetztem Werkzeughalter und Werkzeug im Längsschnitt, teils in Ansicht,

Figur 5a den Werkzeughaltekopf in Aufsicht auf seine Stirnfläche, in einer ersten, mit Figur 3a korrespondierenden Ausführung,

Figur 5b den Werkzeughaltekopf ebenfalls in Aufsicht auf seine Stirnfläche, in einer zweiten, mit Figur 3b korrespondierenden Ausführung und

Figur 6 die Spindel mit Spannzange, Werkzeughaltekopf und Werkzeughalter im Längsschnitt, teils in Ansicht, wobei der linke Teil der Figur 6 Spindel und Haltekopf in unverspanntem Zustand und der rechte Teil der Figur 6 Spindel und Haltekopf in verspanntem Zustand zeigt.

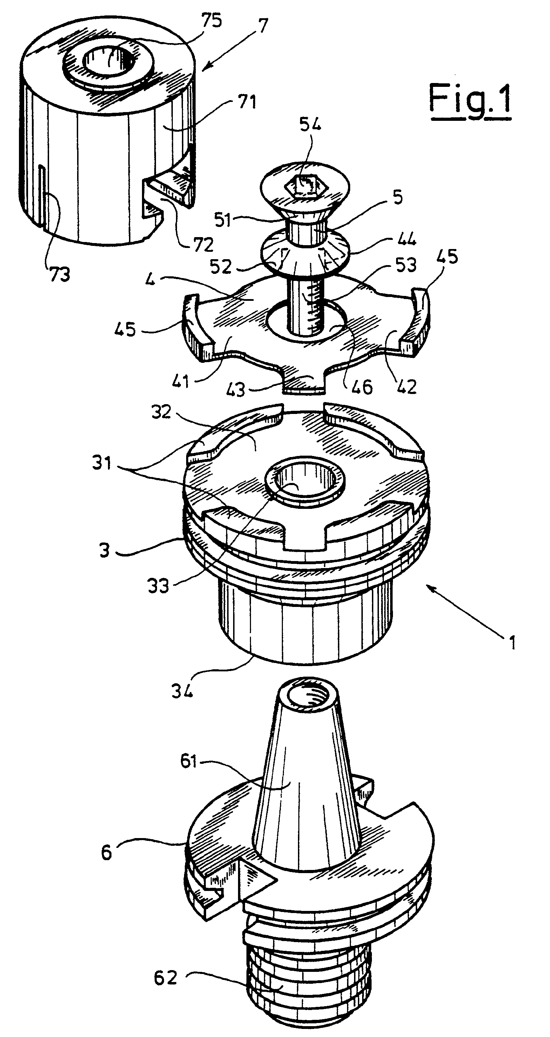

Aus der Figur 1 der Zeichnung ist ersichtlich, daß das dargestellte Ausführungsbeispiel des Werkzeughaltekopfes 1 aus drei Teilen besteht, nämlich einem Grundkörper 3, einem Mitnehmerstern 4 und einem Spannbolzen 5. Der Grundkörper 3 besitzt eine rotationssymmetrische Form mit einem im oberen Teil gegenüber dem unteren Teil vergrößerten Durchmesser. Die Stirnfläche 31 des Körpers 3 ist im wesentlichen flach, wobei in die Stirnfläche 31 eine Ausnehmung 32 für den Mitnehmerstern 4 eingelassen ist. Zentral durch den Grundkörper 3 verläuft eine Bohrung 33 von der Stirnfläche 31 zur Körper-Unterseite 34. Diese Bohrung 33 dient zur Durchführung des unteren Teils 53 des Spannbolzens 5.

Der Mitnehmerstern 4 weist im dargestellten Ausführungsbeispiel vier Arme 41, 42, 43 und 44 auf, die zwei unterschiedliche Gestaltungen aufweisen. Die einander gegenüberliegenden Arme 41 und 42 weisen an ihrem äußeren Ende jeweils nach oben ragende Vorsprünge 45 auf, die in später noch näher zu beschreibender Weise zur Aufnahme eines von einer Werkzeugmaschinenspindel abgegebenen Drehmomentes dienen. Die Arme 43 und 44 sind gänzlich flach und liegen im zusammengebauten Zustand des Werkzeughaltekopfes 1 in passenden Aussparungen zwischen den Teilbereichen der Stirnfläche 31. Die Ausnehmung 32 für den Mitnehmerstern 4 ist so bemessen, daß der Stern 4 ein seitliches Spiel in der Ausnehmung 32 hat. Außerdem ist die Breite der Arme 41 und 42 so bemessen, daß sie nicht in Anlage an die seitlichen Begrenzungen der Ausnehmung 32 gelangen können. Lediglich die beiden Arme 43 und 44 liegen an ihren äußeren Enden an den Begrenzungen der Ausnehmung 32 an.

Wie aus der Figur 1 weiter ersichtlich ist, ist der Spannbolzen 5 mit seinem unteren Teil 53 durch eine zentrale Öffnung 46 im Mitnehmerstern 4 führbar. An seinem oberen Ende weist der Spannbolzen 5 einen umgekehrt kegelstumpfförmigen Zentrierkonus 51 auf, der zur gleichzeitigen Zentrierung und Verspannung des Werkzeughaltekopfes 1 an einer Spindel der Werkzeugmaschine dient. Im Abstand unterhalb des Zentrierkonus 51 besitzt der Spannbolzen 5 einen vorkragenden Rückhalterand 52, dessen Durchmesser größer ist als der Durchmesser der zentralen Öffnung 46 im Mitnehmerstern 4. Hierdurch wird erreicht, daß der Stern 4 in zusammengebautem Zustand des Werkzeughaltekopfes 1 unverlierbar ist. In der oberen Stirnfläche des Spannbolzens 5, genauer des Zentrierkonus 51, ist bei dem Ausführungsbeispiel noch ein Sechskantloch 54 zur Aufnahme eines passenden Sechskantschlüssels vorhanden.

Im unteren Teil der Figur 1 ist ein herkömmlicher Werkzeughalter 6 dargestellt, der bei der gezeigten Ausführung des Werkzeughaltekopfes 1 mit diesem verbindbar ist. Hierzu weist der Grundkörper 3 des Werkzeughaltekopfes 1 eine in dieser Figur nicht sichtbare kegelige Bohrung an seiner Unterseite 34 auf, in die der Kegelschaft 61 des Werkzeughalters 6 einsetzbar ist. Der Kegelschaft 61 weist eine in seinem Inneren verlaufende, nach oben hin offene Gewindebohrung auf, in welche das untere, ebenfalls mit einem Gewinde versehene Ende 53 des Spannbolzens 5 nach Zusammensetzen der einzelnen Teile des Werkzeughaltekopfes einschraubbar ist. Den unteren Teil des Werkzeughalters 6 schließlich bildet ein Futter 62 für die Aufnahme eines Bohrers, eines Fräsers oder dergleichen.

Im oberen Teil der Figur 1 ist eine Spannzange 7 dargestellt, die eine zylindrische Außenfläche 71 aufweist. Im oberen Teil der Spannzange 7 ist eine zentrale Öffnung 75 erkennbar, die zur Einführung einer später noch zu beschreibenden Zugstange dient. Im rechten unteren Teil der Außenseite 71 der Spannzange 7 ist eine im wesentlichen T-förmige Ausnutung 72 sichtbar, die so bemessen ist, daß der Zentrierkonus 51 des Spannbolzens 5 von der Seite her in das Innere der Spannzange 7 bewegbar ist. Im linken unteren Teil der Außenseite 71 der Spannzange 7 ist schließlich noch ein Schlitz 73 erkennbar, der dazu dient, eine geringfügige Aufweitung des unteren Teils der Spannzange 7 zu gestatten.

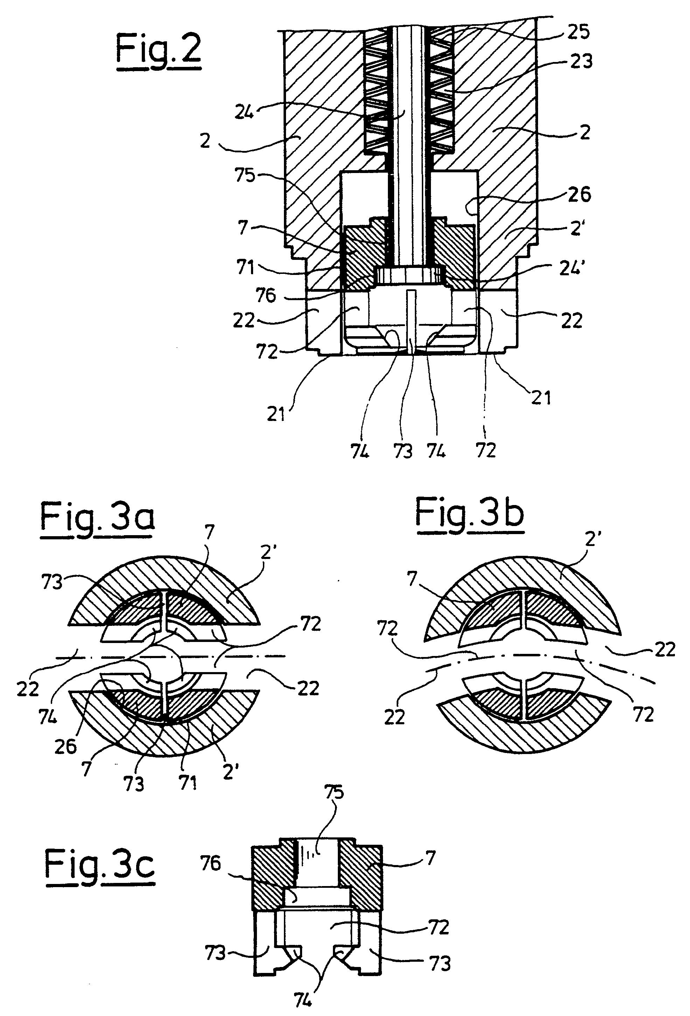

Aus der Figur 2 der Zeichnung ist die Anordnung der Spannzange 7 mit der zugehörigen, bereits erwähnten Zugstange 24 im Inneren einer Spindel 2 einer Werkzeugmaschine erkennbar. Die Spindel 2 ist im Bereich ihres unteren Endes 2' hohl ausgeführt und bildet so eine zylindrische Spannzangenführung 26. In dieser Führung 26 ist die Spannzange 7 praktisch spielfrei in axialer Richtung verschiebbar. Zur Verschiebung der Spannzange 7 dient die Zugstange 24, die mittels eines Kopfes 24' an ihrem unteren Ende, der in einer Aufnahme 76 in der Spannzange 7 angeordnet ist, mit dieser verbunden ist. Die Zugstange 24 ist durch Tellerfederpakete 25, die in einem die Stange 24 umgebenden Hohlraum 23 in der Spindel 2 angeordnet sind, in Zugrichtung, d.h. in der Figur 2 nach oben hin vorbelastet. Zur Bewegung der Stange 24 nach unten dient, wie auch bei herkömmlichen Werkzeugmaschinen üblich, ein am nicht dargestellten oberen Ende der Stange 24 angreifender Hydraulikzylinder. Wie die Figur 2 weiter zeigt, verläuft das untere Ende der Zugstange 24 durch die Öffnung 75 durch den oberen Teil der Spannzange 7. Mit ihrer Außenseite 71 liegt die Spannzange 7 in der Praxis an der Spannzangenführung 26 der Spindel 2 an, wobei in der Figur 2 zur Erzielung einer besseren Übersichtlichkeit der Darstellung zwischen beiden ein sichtbarer Spaltraum vorhanden ist.

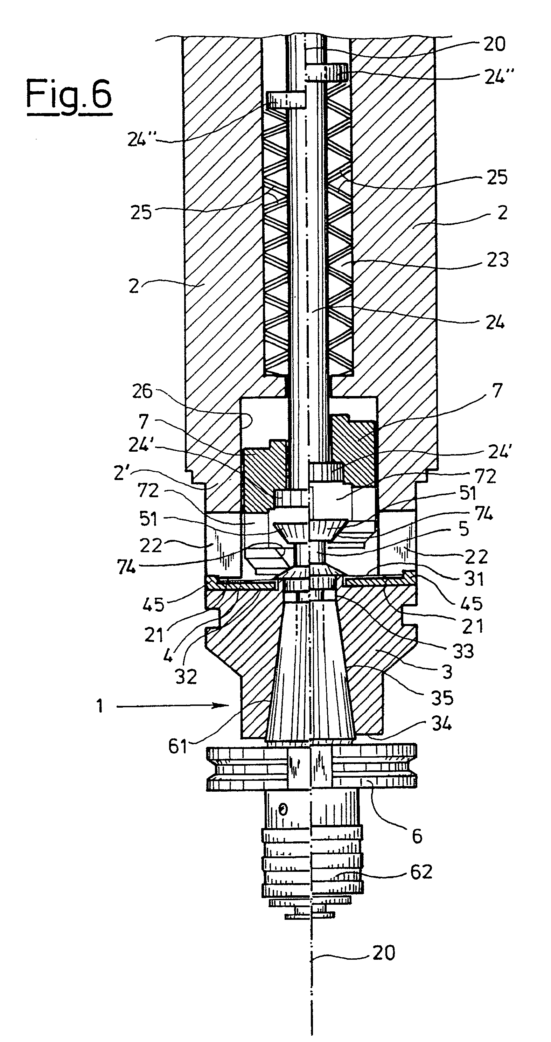

Im unteren Teil der Spannzange 7 ist der Verlauf der T-förmigen Ausnutung 72 erkennbar, die bei dem dargestellten Ausführungsbeispiel vollständig durch die Spannzange 7 hindurch verläuft. Weiterhin weist die Spannzange 7 in ihrem unteren Teil eine innenliegende, konische Gegenfläche 74 für den Zentrierkonus 51 des Spannbolzens 5 auf. Das Zusammenwirken von Spannbolzen 5 bzw. Zentrierkonus 51 und Spannzange 7 bzw. deren konischer Gegenfläche 74 wird an späterer Stelle anhand der Figur 6 noch näher erläutert werden.

Außerdem zeigt die Figur 2 noch den um etwa 90° gegenüber der Ausnutzung 72 verdreht durch den unteren Teil der Spannzange 7 verlaufenden Schlitz 73.

Weiterhin ist ersichtlich, daß das untere Ende 2' der Spindel 2 ebenfalls ausgenutet ist, wobei hier die Ausnutung 22 die Form eines Rechteckes aufweist und mit der Ausnutung 72 in der Spannzange 7 fluchtet. Die Stirnfläche 21 der Spindel 2 ist beim dargestellten Ausführungsbeispiel flach und weist einen Durchmesser auf, der im wesentlichen dem Durchmesser der Stirnfläche 31 des Grundkörpers 3 des Werkzeughaltekopfes 1 entspricht. Die Figuren 3a und 3b zeigen zwei unterschiedliche Ausführungen von Spindel 2 und Spannzange 7, deren Unterschied im Verlauf der Ausnutungen 22 bzw. 72 besteht. Figur 3a zeigt ein Ausführungsbeispiel, bei dem die Ausnutungen 22 im unteren Spindelende 2' und die T-förmige Ausnutung 72 in der Spannzange 7 geradlinig durch Spindelende 2' und Spannzange 7 verlaufen. Weiter ist aus der Figur 3a der Verlauf der Schlitze 73 in einem etwa rechten Winkel zur T-förmigen Ausnutung 72 in der Spannzange 7 erkennbar. Die Außenseite 71 ist, wie in dieser Figur besonders deutlich wird, kreisrund, und ist von der die Spannzangenführung 26 bildenden Innenseite des Spindelendes 2' umgeben. Schließlich ist in Figur 3a die in vier Teilflächen unterteilte konische Gegenfläche 74 zum Zentrierkonus 51 des Spannbolzens 5 erkennbar.

Bei dem in Figur 3b dargestellten Ausführungsbeispiel verlaufen im Unterschied zu dem Beispiel nach Figur 3a die Ausnutungen 22 im Spindelende 2' und die T-förmige Ausnutung 72 in der Spannzange 7 entlang einer gebogenen Linie. Hierdurch besteht die Möglichkeit, einen Werkzeughaltekopf, genauer dessen Zentrierkonus 51, je nach Ausführung einer Werkzeugwechseleinrichtung geradlinig oder auch auf einer gebogenen Bahn in das Zentrum der Spannzange 7 bzw. aus diesem heraus zu verfahren.

Figur 3c zeigt die Spannzange 7 aus Figur 2 in gleicher Darstellung, jedoch in einer um etwa 90° um die Längsachse verdrehten Position. Der Blick des Betrachters geht nun durch die T-förmige Ausnutung 72 hindurch, während die Schlitze 73 in der Zeichnungsebene liegen. Im oberen Teil der Spannzange 7 ist wieder die zentrale Öffnung 75 mit der nach unten daran anschließenden Aufnahme 76 für die Zugstange bzw. deren Kopf erkennbar. Schließlich sind in der Figur 3c im unteren Teil der Spannzange 7 noch Anordnung und Verlauf der konischen Gegenfläche 74 ersichtlich.

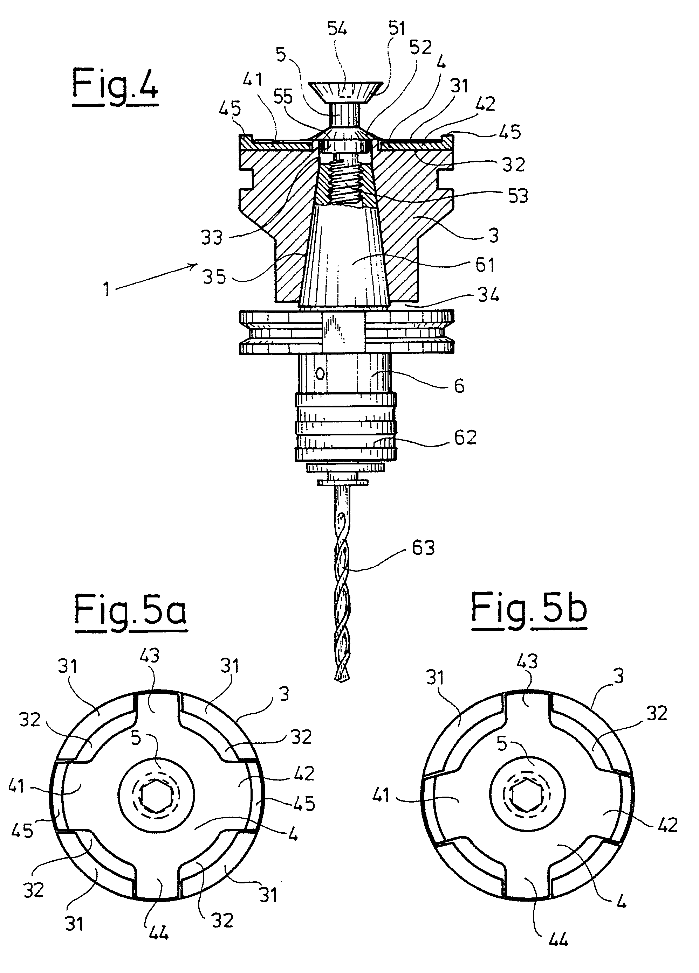

Figur 4 zeigt den Werkzeughaltekopf 1 zusammen mit einem herkömmlichen Werkzeughalter 6 in zusammengebautem Zustand im Längsschnitt, teils in Ansicht. Den zentralen Teil des Werkzeughaltekopfes 1 bildet der Grundkörper 3, an dessen Oberseite die Ausnehmung 32 mit dem darin eingelegten Mitnehmerstern 4 erkennbar ist. Wie in dieser Darstellung sichtbar wird, ragt die Stirnfläche 31 über die Oberkante des Mitnehmersterns 4 vor, so daß dieser auch bei Anlage des Werkzeughaltekopfes 1 an einer Spindel einer Werkzeugmaschine ein seitliches Spiel behält. An dem Mitnehmerstern 4 sind hier die beiden Arme 41 und 42 sichtbar, an deren äußeren Enden die nach oben aufragenden Vorsprünge 45 liegen. Vom Zentrum der Stirnseite 31 des Grundkörpers 3 ragt der Spannbolzen 5 nach oben, dessen oberes Ende durch den Zentrierkonus 51 mit dem darin liegenden Sechskantloch 54 gebildet wird. Unterhalb des Zentrierkonus 51 ist der Rückhalterand 52 an dem Spannbolzen 5 angeordnet, der dafür sorgt, daß der Mitnehmerstern 4 zwar ein seitliches Spiel, jedoch keine wesentliche Bewegungsfreiheit nach oben hat.

Im Inneren des Grundkörpers 3 sind die zentrale Bohrung 33 sowie die kegelförmige Ausnehmung 35 erkennbar. In das Innere der kegelförmigen Ausnehmung 35 ist der Kegelschaft 61 des Werkzeughalters 6 von der Unterseite 34 des Grundkörpers 3 her eingesetzt. Dabei sind der Grundkörper 3 und der Werkzeughalter 6 durch den mit seinem unteren Gewindeende 53 in den Kegelschaft 61 eingeschraubten Spannbolzen 5 fest verbunden. Zur Sicherstellung einer genauen Konzentrizität von Spannbolzen 5 und Werkzeughalter 6 weist der Bolzen 5 unterhalb des Rückhalterandes 52 einen zentrischen Ansatz 55 auf, der in verschraubtem Zustand von Bolzen 5 und Halter 6 im Preßsitz in der zentralen Bohrung 33 in dem Grundkörper 3 sitzt. Der in der Figur 4 sichtbare Spalt zwischen Rand 55 und Bohrung 33 ist lediglich zur Erzielung einer besseren Übersichtlichkeit der Darstellung in der Zeichnung vorhanden. Das untere Ende des Werkzeughalters 6 bildet das Futter 62, in das im dargestellten Ausführungsbeispiel ein Bohrer 63 als Beispiel für ein Werkzeug eingesetzt ist.

Die Figuren 5a und 5b zeigen eine Aufsicht auf zwei Ausführungsbeispiele des Werkzeughaltekopfes, wobei die Ausführung gemäß Figur 5a mit der Spindel- und Spannzangen-Ausführung gemäß Figur 3a korrespondiert und die Ausführung gemäß Figur 5b mit dem Ausführungsbeispiel von Spindel und Spannzange nach Figur 3b korrespondiert. Figur 5a zeigt die Stirnfläche 31 des Grundkörpers 3 sowie die in dieser angeordnete Ausnehmung 32 für den Mitnehmerstern 4. Im Zentrum der Figur 5a ist der Spannbolzen 5, genauer die Oberseite des Zentrierkonus 51 erkennbar. Der bei diesem Ausführungsbeispiel in die Aussparung 32 im Grundkörper 3 eingelegte Mitnehmerstern 4 besitzt, wie bereits zuvor erläutert, vier Arme 41, 42, 43 und 44, die hier jeweils einen Winkel von 90° einschließen. An den Enden der Arme 41 und 42 sind wieder die Vorsprünge 45 erkennbar.

Im Unterschied hierzu sind in dem Ausführungsbeispiel gemäß Figur 5b die Arme 41 und 42 des Mitnehmersterns 4 nicht im rechten Winkel zu den anderen beiden Armen 43 und 44 angeordnet, sondern so geformt, daß sie parallel zu einer gebogenen Linie verlaufen. Entsprechend ist auch die Ausnehmung 32 in der Stirnseite 31 des Grundkörpers 3 deckungsgleich geformt. Unabhängig davon behält der Spannbolzen 5 seine zentrale Position, wie auch im Ausführungsbeispiel nach Figur 5a.

Die unterschiedlichen Ausführungen des Mitnehmersterns 4 und der Stirnseite 31 des Grundkörpers 3 des Werkzeugaufnahmekopfes 1 dienen dazu, die Lage und Form der Arme 41 und 42 des Mitnehmersterns so auszubilden, daß die Arme 41 und 42 mit ihren Vorsprüngen 45 genau in die Ausnutungen 22 der zugehörigen, entsprechend geformten Spindel 2 passen.

Die Figur 6 schließlich zeigt die Spindel 2 einer Werkzeugmaschine mit daran angesetztem Werkzeughaltekopf 1 in zwei Funktionszuständen, nämlich im linken Teil der Figur 6 in unverspanntem Zustand und im rechten Teil der Figur 6 im verspannten Zustand.

Im oberen Teil der Figur 6 ist zunächst die Spindel 2 erkennbar, die während des Spannvorganges ihre Lage beibehält. Im Inneren der Spindel 2 ist die Zugstange 24 geführt. Die Stange 24 wird durch in dem Hohlraum 23 angeordnete, die Stange 24 umgebende Tellerfederpakete 25 unter eine mechanische Vorspannung gesetzt. Zur Abstützung der Tellerfedern 25 ist am oberen Teil der Stange 24 ein Kopf 24″ vorgesehen. Im linken Teil der Figur 6, d.h. in dem Teil der Darstellung, der links von der Mittelachse 20 liegt, ist die Stange 24 nach unten verschoben. Demzufolge ist auch die Spannzange 7 in ihrer Führung 26 im unteren Ende 2′ der Spindel 2 nach unten verschoben. In dieser nach unten verschobenen Position fluchtet die T-förmige Ausnutung 72 in der Spannzange 7 mit der Ausnutung 22 im Spindelende 2′. Wie aus der Darstellung ersichtlich ist, kann in dieser Position der Spannzange 7 der Werkzeughaltekopf 1 ohne Axialbewegungen ausführen zu müssen, von der Seite her durch die Ausnutung 22 in das Zentrum der Ausnutung 72 der Spannzange 7 verfahren werden. In diesem Zustand liegt der Zentrierkonus 51 frei oberhalb der konischen Gegenfläche 74 der Spannzange 7. Zwischen der Stirnseite 31 des Grundkörpers 3 des Werkzeughaltekopfes 1 und der Stirnfläche 21 des Spindelendes 2′ verbleibt ein kleiner Spaltraum, der zu einer behinderungsfreien Zuführung des Werkzeughaltekopfes 1 von der Seite her ausreicht. Der Vorsprung 45 an dem Mitnehmerstern 4 liegt bereits teilweise in der Ausnutung 22 im Spindelende 2′.

Aus dem rechten Teil der Figur 6 ist ersichtlich, daß die Zugstange 24 nunmehr um einen gewissen Wegbetrag nach oben verschoben ist, wodurch auch die Spannzange 7, die mit der Zugstange 24 über deren Kopf 24′ kraftschlüssig verbunden ist, nach oben verschoben ist. In diesem Funktionszustand liegt die konische Gegenfläche 74 der Spannzange 7 formschlüssig und dicht an der konischen Fläche des Zentrierkonus 51 an. Aufgrund der durch die Tellerfederpakete 25 ausgeübten hohen Kraft auf die Zugstange 24 wird der Werkzeughaltekopf 1 durch das Zusammenwirken von Zentrierkonus 51 und konischer Gegenfläche 74 im unteren Teil der Ausnutung 72 der Spannzange 7 exakt und dauerhaft zentriert.

Wie Figur 6 weiter zeigt, führt bei diesem Spannvorgang der Werkzeughaltekopf 1 sowie der Spannbolzen 5 lediglich einen sehr geringen axialen Hub aus. Hierdurch kann ein Werkzeugwechselvorgang sehr schnell ausgeführt werden.

Die Drehmomentübertragung vom unteren Ende 2' der Spindel 22 auf den Werkzeughaltekopf 1 erfolgt über den Mitnehmerstern 4, wobei die Drehmomentabgabe von dem Spindelende 2' an den Mitnehmerstern 4 über die an den Begrenzungen der Ausnutungen 22 anliegenden Vorsprünge 45 erfolgt.

Im unteren Teil der Figur 6 ist, wie bereits früher erläutert, ersichtlich, daß ein herkömmlicher Werkzeughalter 6 mit seinem Kegelschaft in eine passende Ausnehmung 35 in den Grundkörper 3 von dessen Unterseite 34 eingesetzt ist und dort mittels des Spannbolzens 5 verschraubt ist. Den unteren Teil des Werkzeughalters 6 bildet wieder das Futter 62. Alternativ kann der Werkzeughaltekopf 1 auch unmittelbar mit einem Futter versehen sein.

**Ansprüche**

1. Werkzeugmaschine, Stanzmaschine oder dergleichen Maschine mit einer Werkzeughalteeinrichtung für den automatischen Werkzeugwechsel, wobei die Maschine eine Spindel aufweist, die in ihrem freien Ende eine als Spannzange ausgebildete Spanneinrichtung für ein Werkzeug besitzt, welches durch eine Werkzeugwechseleinrichtung zu- und abführbar ist, wobei in der Spindel eine die Spannzange durch axiale Verschiebung betätigende Zugstange geführt ist und wobei das Werkzeug jeweils spindelseitig einen Werkzeughaltekopf mit einem umgekehrt kegelstumpfförmigen Zentrierkonus aufweist, der zur Verspannung des Werkzeuges gegen die Spindel von der Spannzange in deren Spannstellung mit einer konischen Innenfläche hintergreifbar ist, dadurch gekennzeichnet, daß die Spannzange (7) mit einer wenigstens einseitig offenen T-förmigen Ausnutung (72) versehen ist, daß das Spindelende (2') wenigstens einseitig eine T-förmige oder rechteckförmige Ausnutung (22) aufweist und daß die Ausnutungen (72, 22 von Spannzange (7) und Spindelende (2') ein Ein-und Ausfahren des Werkzeughaltekopfes (1) von der Seite her bzw. zur Seite hin ermöglichend in Flucht miteinander positionierbar sind.

2. Werkzeugmaschine, Stanzmaschine oder dergleichen Maschine nach Anspruch 1, dadurch gekennzeichnet, daß die Ausnutungen (72, 22) in der Spannzange (7) und der Spindel (2) zur Gestattung eines Durchfahrens des Werkzeughaltekopfess (1) durch diese miteinander fluchtend je nach Ausführung der Werkzeugwechseleinrichtung in einer geraden Linie oder in einer bogenförmigen Linie vollständig durch Spannzange (7) und Spindel (2) verlaufen.

3. Werkzeugmaschine, Stanzmaschine oder dergleichen Maschine nach den Ansprüchen 1 und 2, dadurch gekennzeichnet, daß der Zentrierkonus (51) als Kopfende eines zentrisch aus einer im wesentlichen flachen Stirnseite (31) des Werkzeughaltekopfes (1) vorragenden Spannbolzens (5) ausgebildet ist und daß der Werkzeughaltekopf (1) mit seiner Stirnseite (31) flächig gegen eine dieser zugewandte Stirnfläche (21) der Spindel (2) unter Zentrierung durch die zusammenwirkenden konischen Flächen von Zentrierkonus (51) und Spannzange (7) verspannbar ist.

4. Werkzeugmaschine, Stanzmaschine oder dergleichen Maschine nach den Ansprüchen 1 bis 3, dadurch gekennzeichnet, daß zwischen dem Werkzeughaltekopf (1) und der Spindel (2) ein mehrarmiger, wenigstens vierarmiger, flacher Mitnehmerstern (4) mit Spiel senkrecht zur Spindellängsachse (20) angeordnet ist, wobei wenigstens zwei Arme (41, 42) einander gegenüberliegend an der Spindel (2) und zwei andere Arme (43, 44) einander gegenüberliegend an dem Werkzeughaltekopf (1) zur Drehmomentübertragung abgestützt sind.

5. Werkzeugmaschine, Stanzmaschine oder dergleichen Maschine nach den Ansprüchen 1 bis 4, dadurch gekennzeichnet, daß die an der Spindel (2) abgestützten Arme (41, 42) des Mitnehmersterns (4) endseitig aufragende, in die in der Spindel (2) vorhandene Ausnutung (22) eingreifende Vorsprünge (45) aufweisen und daß der Mitnehmerstern (4) mit seinen Armen (41 - 44) in einer ein Seitenspiel senkrecht zur Spindellängsachse (20) erlaubenden, passend geformten Ausnehmung (32) in der Stirnseite (31) des Werkzeughaltekopfes (1) versenkt angeordnet ist.

6. Werkzeugmaschine, Stanzmaschine oder dergleichen Maschine nach den Ansprüchen 1 bis 5, dadurch gekennzeichnet, daß der Mitnehmerstern (4) eine zentrale Öffnung (46) aufweist, daß der Spannbolzen (5) durch diese Öffnung (46) hindurchgeführt und mit dem Werkzeughaltekopf (1) verschraubt ist und daß der Spannbolzen (5) einen in eingeschraubtem Zustand oberhalb des Mitnehmersterns (4) im Abstand von diesem verlaufenden, vorkragenden Rückhalterand (52) aufweist.

7. Werkzeugmaschine, Stanzmaschine oder dergleichen Maschine nach den Ansprüchen 1 bis 6, dadurch gekennzeichnet, daß die Spannzange (7) zusätzlich zu ihrer Ausnutung (72) in ihrem unteren Teil eine Schlitzung (73) aufweist.

8. Werkzeugmaschine, Stanzmaschine oder dergleichen Maschine nach den Ansprüchen 1 bis 7, dadurch gekennzeichnet, daß der Werkzeughaltekopf (1) als Adapter (3) mit einer kegelförmigen Ausnehmung (35) in seiner Unterseite (34) zur Aufnahme eines herkömmlichen, mit einem Kegelschaft (61) ausgestatteten Werkzeuges bzw. Werkzeughalters (6) ausgebildet ist.

## Claims

1. Machine tool, stamping machine or suchlike machine, with a tool holding device for the automatic changeover of tools, in which the machine has a spindle which in its free end has a clamping device constructed as clamping pincers for a tool, which is able to be brought in and removed by a tool changing device, wherein in the spindle a draw rod rod is guided, which actuates the clamping pincers by axial displacement, and wherein the tool in each case on the spindle side has a tool holding head with a centering cone in the shape of an inverted frustum, which for the clamping of the tool against the spindle by the clamping pincers in their clamping position is able to be engaged behind with a conical inner face, characterized in that the clamping pincers (7) are provided with a T-shaped groove (72) which is open at least on one side, that the spindle end (2') at least on one side has a T-shaped or rectangular groove (22) and that the grooves (72, 22) of the clamping pincers (7) and spindle end (2') are able to be positioned in alignment with each other, making it possible to bring the tool holding head (1) in and out from the side or respectively to the side

2. Machine tool, stamping machine or suchlike machine, according to Claim 1, characterized in that the grooves (72, 22) in the clamping pincers (7) and in the spindle (2), to allow the tool holding head (1) to pass through these, run in alignment with each other depending on the design of the tool changing device in a straight line or in a curved line completely through the clamping pincers (7) and spindle (2).

3. Machine tool, stamping machine or suchlike machine according to Claims 1 and 2, characterized in that the centering cone (51) is constructed as the head end of a clamping bolt (5) projecting centrally from a substantially flat end face (31) of the tool holding head (1) and that the tool holding head (1) is able to be clamped with its end face (31) flatly against an end face (21) of the spindle (2) facing thereto, with centering through the cooperating conical surfaces of the centering cone (51) and the clamping pincers (7).

4. Machine tool, stamping machine or suchlike machine according to Claims 1 to 3, characterized in that between the tool holding head (1) and the spindle (2), a flat star-shaped carrier piece (4) having several arms, at least four arms, is arranged with play vertically to the longitudinal axis (20) of the spindle, wherein at least two arms (41, 42) lying opposite each other are supported against the spindle (2) and two other arms (43, 44) lying opposite each other are supported against the tool holding head (1) to transmit the moment of rotation.

5. Machine tool, stamping machine or suchlike machine according to Claims 1 to 4, characterized in that the arms (41, 42) of the star-shaped carrier piece (4) which are supported against the spindle (2) have projections (45) protruding on the end side and engaging into the groove (22) in the spindle (2), and that the star-shaped carrier piece (4) with its arms (41-44) is in sunken arrangement in a recess (32) of matching shape, permitting a lateral play vertically to the longitudinal axis of the spindle (20), in the end face (31) of the tool holding head (1).

6. Machine tool, stamping machine or suchlike machine according to Claims 1 to 5, characterized in that the star-shaped carrier piece (4) has a central opening (46), that the clamping bolt (5) is guided through this opening (46) and is screwed to the tool holding head (1) and that the clamping bolt (5) has a protruding retaining rim (52) which in screwed-in state runs above the star-shaped carrier piece (4) at a distance therefrom.

7. Machine tool, stamping machine or suchlike machine according to Claims 1 to 6, characterized in that in addition to their groove (72), the clamping pincers (7) have a slit (73) in their lower part.

8. Machine tool, stamping machine or suchlike machine according to Claims 1 to 7, characterized in that the tool holding head (1) is-constructed as an adaptor (3) with a tapered recess (35) in its underside (34) to receive a conventional tool or respectively tool holder (6) equipped with a taper shaft (61).

## Revendications

1. Machine-outil, poinçonneuse ou machine analogue, comprenant un dispositif de fixation d'outil pour le changement automatique d'outil, la machine présentant une broche qui possède dans son extrémité libre un dispositif de serrage réalisé sous forme de pince de serrage pour un outil qui peut être amené et évacué par un dispositif de changement d'outil, une barre de traction actionnant la pince de serrage par déplacement axial étant guidée dans la broche et l'outil présentant, côté broche, une tête de fixation d'outil avec un cône de centrage en forme de cône tronqué renversé qui, pour serrer l'outil vers la broche, peut être maintenue par la pince de serrage sans sa position de serrage avec une surface intérieure conique, caractérisée en ce que la pince de serrage (7) est munie d'une encoche (72) en forme de T ouverte au moins d'un côté, en ce que l'extrémité de broche (2') présente au moins d'un côté une encoche (22) en forme de T ou rectangulaire et en ce que les encoches (72, 22) de la pince de serrage (7) et de l'extrémité de broche (2') peuvent être amenées en alignement de manière à permettre une amenée et une évacuation de la tête de fixation d'outil (1) respectivement à partir du côté et vers le côté.

2. Machine-outil, poinçonneuse ou machine analogue selon la revendication 1, caractérisée en ce que les encoches (72, 22) dans la pince de serrage (7) et la broche (2) s'étendent, en étant alignées les unes par rapport aux autres, entièrement dans la pince de serrage (7) et la broche (2), selon la réalisation du dispositif de changement d'outil, sur une ligne droite ou sur une ligne courbe, afin de permettre un passage de la tête de fixation d'outil (1) dans lesdites encoches.

3. Machine-outil, poinçonneuse ou machine analogue, selon les revendications 1 et 2, caractérisée en ce que le cône de centrage (51) est réalisé sous forme d'extrémité de tête d'un boulon de serrage (5) faisant saillie centralement d'un côté frontal essentiellement plat de la tête de fixation d'outil (1) et en ce que la tête de fixation d'outil (1) peut être serrée avec son côté frontal (31) à plat contre une surface frontale (21) de la broche (2) tournée vers ledit côté frontal en étant centrée par les surfaces coniques interagissant du cône de centrale (51) et de la pince de serrage (7).

4. Machine-outil, poinçonneuse ou machine analogue selon les revendications 1 à 3, caractérisée ence qu'une étoile d'entraînement (4) plate à plusieurs branches, à au moins quatre branches, est disposée avec jeu entre la tête de fixation d'outil (1) et la broche (2), perpendiculairement à l'axe longitudinal de broche (20), au moins deux branches (41, 42) prenant appui l'une en face de l'autre sur la broche (2) et deux autres branches (43, 44) prenant appui l'une en face de l'autre sur la tête de fixation d'outil (1) pour transmettre le moment de rotation.

5. Machine-outil, poinçonneuse ou machine analogue selon les revendications 1 à 4, caractérisée en ce que les branches (41, 42) de l'étoile d'entraînement (4) qui prennent appui sur la broche (2) présentent des saillies (45) qui dépassent côté extrémité et s'engagent dans l'encoche (22) réalisée dans la broche (2) et en ce que l'étoile d'entraînement (4) est enfoncée avec ses branches (41 à 44) dans un évidement (32) formé de manière appropriée, permettant un jeu latéral perpendiculairement à l'axe longitudinal de broche (20) et réalisé dans le côté frontal (31) de la tête de fixation d'outil (1).

6. Machine-outil, poinçonneuse ou machine analogue selon les revendications 1 à 5, caractérisée en ce que l'étoile d'entraînement (4) présente une ouverture centrale (46), en ce que le boulon de serrage (5) est guidé à travers cette ouverture (46) et est vissé avec la tête de fixation d'outil (1) et en ce que le boulon de serrage (5) présente un bord de retenue (52) saillant, s'étendant lorsque l'étoile d'entraînement (4) est vissée, à distance de cette dernière.

7. Machine-outil, poinçonneuse ou machine analogue selon les revendications 1 à 6, caractérisée en ce que la pince de serrage (7) présente en plus de son encoche (72), une fente (73) dans sa partie inférieure.

8. Machine-outil, poinçonneuse ou machine analogue selon les revendications 1 à 7, caractérisée en ce que la tête de fixation d'outil (1) est réalisée sous forme d'adaptateur (3) avec un évidement conique (35) dans son côté inférieur (34) pour recevoir un outil ou un porte-outil (6) traditionnel équipé d'une tige conique (61).

Fig.1

Fig.2

Fig.3a

Fig.3b

Fig.3c

Fig.4

Fig.5a

Fig.5b

## Fig.6